## Europäisches Patentamt

## European Patent Office

## Office européen des brevets

(11) Veröffentlichungsnummer: **0 152 723**
**B1**

(12) **EUROPÄISCHE PATENTSCHRIFT**

(45) Veröffentlichungstag der Patentschrift:
08.06.88

(51) Int. Cl.⁴: **F 16 L  33/22,** F 16 L  47/00

(21) Anmeldenummer: **84810659.7**

(22) Anmeldetag: **28.12.84**

(54) Vorrichtung zum Verbinden eines Rohres mit einem Gewindeanschlussstutzen.

(30) Priorität: **12.01.84  CH 151/84**

(43) Veröffentlichungstag der Anmeldung:
**28.08.85 Patentblatt 85/35**

(45) Bekanntmachung des Hinweises auf die Patenterteilung:
**08.06.88 Patentblatt 88/23**

(84) Benannte Vertragsstaaten:
**AT BE CH DE FR GB IT LI LU NL SE**

(56) Entgegenhaltungen:
**DE-A-2 240 918
DE-B-1 163 620
FR-A-1 313 935
FR-A-2 379 009
FR-A-2 398 958
GB-A-875 742
US-A-3 030 129**

(73) Patentinhaber: **Vestol SA., rue de L'Union 15, CH-1800 Vevey (CH)**

(72) Erfinder: **Gschwind, Peter, Neumatten 220, CH-4655 Stüsslingen (CH)**

(74) Vertreter: **Rochat, Daniel Jean, Bovard AG Patentanwälte VSP Optingenstrasse 16, CH- 3000 Bern 25 (CH)**

**Beschreibung**

Die Erfindung geht aus von einer Vorrichtung zum Verbinden eines Rohres mit einem Gewindeanschlußstutzen, mit einer über das Rohr bzw. das Rohrende übergestülpten Überwurfmutter und einem auf das Rohrende aufgesetzten Klemmschuh, der im Längsschnitt im wesentlichen die Form eines einen Auslaufteil aufweisenden U's hat, dessen Schenkel auf dem Rohrende rittlings aufgesetzt und an ihren dem Rohr zugekehrten Flächen mit jeweils einer Zahnung versehen sind, wobei in der von innen dem Gewindeanschlußstutzen zugekehrten Fläche seines Auslaufteiles sowie in der von innen dem Rohrende zugekehrten Fläche des inneren Schenkels des Klemmschuhes Aussparungen mit eingelegten O-Ringen vorgesehen sind, und die Überwurfmutter beim Anziehen den Klemmschuh an das Rohr klemmt.

Die Herstellung der Verbindung eines Rohres mit einem Gewindeanschlußstutzen wurde bis jetzt meistens durch zwei Konusse und eine Überwurfmutter gemacht. Der eine Konus, der einen aus ihm auslaufenden Anschlussteil für das Rohr besitzt, wird in den Gewindeanschlußstutzen eingesetzt. Auf das Rohr das auf dem Anschlussteil aufgesetzt wurde, wird ein schräg geschlitzter Klemmring aufgesetzt. Durch das Anziehen der Überwurfmutter wird der geschlitzte Klemmring zusammengepresst und auf das Rohr angedrückt Durch den schräg verlaufenden Schlitz des Klemmringes soll das Einklemmen des Rohrmaterials in den Klemmring verhindert werden.

Gemäss dem Entwurf der deutschen Norm 8076 ist weiter ein Klemmverbinder aus Metall bekannt, der zum Verbinden von Rohren aus Polyäthylen untereinander oder mit Armaturen usw. bestimmt ist. Der Klemmverbinder besteht aus einer über das Rohr übergestülpten Überwurfmutter und einer in das Rohr eingesetzten Stützhülse. Darüberhinaus weist der Klemmverbinder auch einen Klemmring auf.

Der im Patentanspruch 1 definierten Erfindung lag die Aufgabe zugrunde, eine verbesserte Vorrichtung zum Verbinden eines Rohres mit einem Gewindeanschlußstutzen zu schaffen, die aus einfachen Mitteln besteht und schon z. B. beim Handanziehen eine absolute Dichtheit der Verbindung gewährleistet. Desweiteren sollte bei der Vorrichtung die Wahl des Rohrdurchmessers unabhängig von der Gewindegrösse des Anschlußstutzens ermöglicht werden. Diese Aufgabe wird durch die im kennzeichnenden Teil des Patentanspruches 1 angeführten Merkmale gelöst.

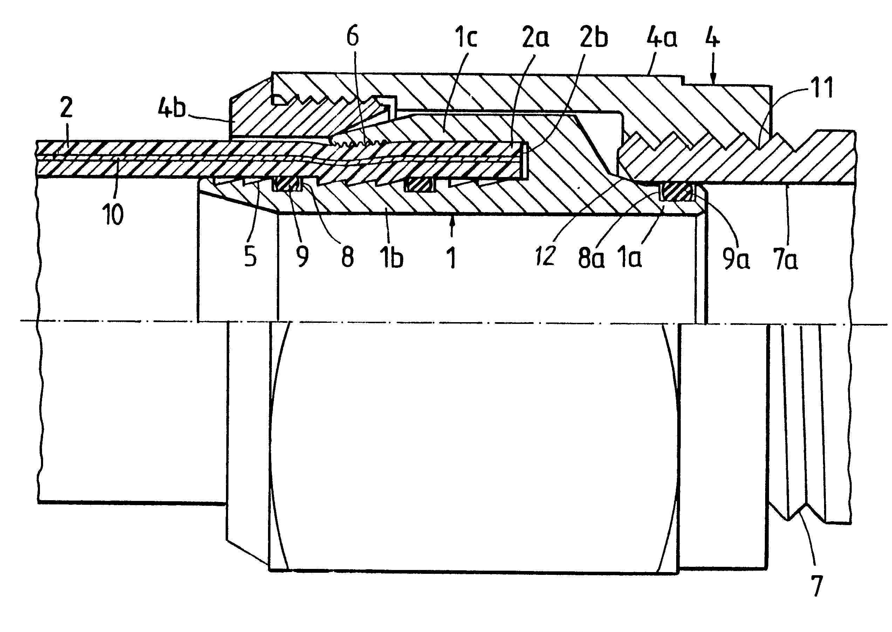

Mit Vorteil kann der Aussendurchmesser des Rohres grosser gewählt werden als der Rechtsgewinde-Innendurchmesser des ersten Teiles der zweiteiligen Mutter. Der Erfindungsgegenstand wird nachstehend anhand der Zeichnung beispielsweise näher erläutert.

Die einzige Figur zeigt einen Längsschnitt der erfindungsgemässen Vorrichtung mit einer zweiteiligen Überwurfmutter.

Die Vorrichtung zum Verbinden eines Rohres 2 mit einem Gewindeanschlußstutzen 7 besteht aus einem Klemmschuh 1 und einer zweiteiligen Überwurfmutter 4. Das Rohr 2 kann aus Metall oder Kunststoff bestehen, oder es kann sich um ein Mehrschichtrohr (Verbundrohr) handeln. Die einzelnen Teile der Vorrichtung bestehen aus Metall. Dies betrifft auch den Gewindeanschlußstutzen 7.

Der Klemmschuh 1 hat im Längsschnitt im wesentlichen die Form eines einen Auslaufteil 1a aufweisenden U's. Die beiden Schenkel 1b, 1c der U-Form sind ungleich lang. Der Klemmschuh 1 ist auf dem Rohrende 2a rittlings aufgesetzt, so dass er das Rohrende 2a gleichzeitig von innen und von aussen umschliesst. Dabei liegt der längere Schenkel 1b der U-Form von innen am Rohrende 2a.

Der längere Schenkel 1b der U-Form ist an seiner dem Rohrende 2 zugekehrten Fläche mit einer groben Zahnung 5 versehen. Ausserdem sind auf dieser Fläche zwei Aussparungen 8 vorgesehen, in welchen elastische O-Ringe eingelegt sind. Der kleinere Schenkel 1c der U-Form liegt von aussen am Rohrende 2a. Auf seiner dem Rohr 2 zugekehrten Fläche weist er eine feine Zahnung 6 auf.

Durch den rittlings auf dem Rohrende 2a des in der Figur dargestellten Verbundrohres 2 aufgesetzten Klemmschuh 1 wird auch die Schnittstelle des Rohres 2 umschlossen, so dass das Aluminiumrohr 10 vor dem Medium und so gegen Nässe und Korrosion geschützt wird. In der von innen dem Gewindeanschlußstutzen 7 zugekehrten Fläche des Auslaufteiles 1a des Klemmschuhs 1 ist ebenfalls eine Aussparung 8a vorgesehen, in welche ein elastischer O-Ring 9a eingelegt ist.

Gemäss der Figur besteht die zweiteilige, über das Rohrende 2a übergestülpte Überwurfmutter 4 aus einem ersten Teil 4a und einem zweiten Teil 4b. Der erste Teil 4a weist an seinem einen Ende ein Rechtsinnengewinde auf, welches mit dem Aussengewinde des Gewindeanschlußstutzens 7 in Eingriff steht. Das andere Ende des ersten Teiles 4a ist mit einem Linksinnengewinde versehen, das mit einem Linksaussengewinde des zweiten Teiles 4b in Eingriff steht, welcher zweiter Teil als Einsatzstück zwischen dem ersten Teil 4a und dem äusseren Schenkel 1c des Klemmschuhes 1 liegt.

In der Figur ist das Rohrende 2a in verklemmter Stellung dargestellt. Beim Anziehen des ersten Teiles 4a der zweiteiligen Überwurfmutter 4 an den Gewindeanschlußstutzen 7 wird das Einsatzstück 4b mitgenommen und gegen den äusseren Schenkel 1c der U-Form gepresst. Hier wird das Rohrende 2a zwischen dem äusseren Schenkel 1c und dem inneren Schenkel 1b der U-Form des Klemmschuhes 1 verklemmt. Durch die Zahnungen 5, 6 wird das Ausreissen des Rohres 2 verhindert.

Bei der angezogenen Überwurfmutter 4 ist jede abzudichtende Stelle innerhalb der Vorrichtung zweimal gedichtet. Die zwischen dem inneren Schenkel 1b des Klemmschuhes 1 und dem Rohrende 2a abzudichtende Stelle wird einmal durch die O-Ringe 9 und andertmal durch die verklemmte Zahnung 5 abgedichtet. Ausserdem wird die zwischen dem äusseren Schenkel 1c des Klemmschuhes 1 und dem Rohrende 2a bzw. der Überwurfmutter 4 abzudichtende Stelle durch die verklemmte Zahnung 6 zusätzlich abgedichtet. Schlussendlich wird die zwischen dem Auslaufteil 1a des Klemmschuhes 1 und der Innenwand 7a des Gewindeanschlußstutzens 7 abzudichtende Stelle einmal durch den O-Ring 9a und andertmal durch die an einer Schrägfläche des Auslaufteiles 1a anliegende Innenwand 7a des Gewindeanschlußstutzens 7 abgedichtet.

Die Dichtheit wird bereits nach einem leichten Anziehen der Überwurfmutter 4 gewährleistet. Das heisst, dass die Vorrichtung z. B. auf einer Baustelle bei einer ungenügenden oder nicht vollständigen Anziehung der Überwurfmutter trotzdem 100-%-ig dicht wird. Die metallische Dichtung wird durch das Anziehen mittels eines nicht dargestellten Werkzeuges (Gabelschlüssel) erreicht.

Die oben beschriebene Vorrichtung ermöglicht, dass der Rohrdurchmesser unabhängig von der Gewindegrösse des Gewindeanschlußstutzens gewählt werden kann, d.h., dass z. B. mit einem T-Stück mit drei gleichen Gewindegrössen durch Verwendung von verschiedenen Klemmschuhen und Überwurfmuttern beliebige Rohrgrössen angeschlossen werden können. So wird ein egales T-Stück zum Reduzier-T-Stück.

Durch eine zweiteilige Überwurfmutter wird ermöglicht, dass ein Rohraussendurchmesser gewählt werden kann, der grösser ist als der Gewindeinnendurchmesser 11 des ersten Teiles 4a, passend zum beliebigen Gewindeanschlußstutzen 7. Durch Zusammenschrauben des Einsatzteiles 4b mit dem Innengewinde des ersten Teiles 4a der zweiteiligen Überwurfmutter 4 wird der Selbstlöse-Effekt bei der späteren Montage von Überwurfmutter und Klemmschuh auf einen beliebigen Gewindeanschlußstutzen verhindert, resp. durch eine Gegenwirkung das Anzugsmoment vergrössert.

Folgende Anschlussgrössen bei der Wandstärke der Rohre von 1 bis 6 mm sind z. B. möglich:

| z. B.<br>Gasrohrgewinde | | Rohr-<br>Innendurchmesser |
| --- | --- | --- |
| 3/8" | x | 8 - 18 mm |
| 1/2" | x | 10 - 22 mm |
| 3/4" | x | 12 - 30 mm |
| 1" | x | 12 - 35 mm |
| 1.1/4" | x | 18 - 45 mm |
| 1.1/2" | x | 20 - 50 mm |
| 2" | x | 25 - 65 mm |

**Patentansprüche**

1. Vorrichtung zum verbinden eines Rohres mit einem Gewindeanschlußstutzen, mit einer über das Rohr (2) bzw. das Rohrende (2a) übergestülpten Überwurfmutter (4) und einem auf das Rohrende (2a) aufgesetzten Klemmschuh (1), der im Längschnitt im wesentlichen die Form eines einen Auslaufteil (1a) aufweisenden U's hat, dessen Schenkel (1b, 1c) auf dem Rohrende (2a) rittlings aufgesetzt und an ihren dem Rohr (2) zugekehrten Flächen mit jeweils einer Zahnung (5, 6) versehen sind, wobei in der von innen mit Gewindeanschlußstutzen (7) zugekehrten Fläche seines Auslaufteiles (1a) sowie in der von Innen dem Rohrende (2a) zugekehrten Fläche des inneren Schenkels (1b) des Klemmschuhes (1) Aussparungen (8, 8a) mit eingelegten O-Ringen (9, 9a) vorgesehen sind, und die Überwurfmutter (4) beim Anziehen den Klemmschuh (1) an das Rohrende (2) klemmt, dadurch gekennzeichnet, dass die Überwurfmutter (4) eine Mutter mit einem ersten (4a) und einem zweiten (4b), mit dem ersten Teil (4a) in Eingriff stehenden Teil ist, dass der erste Teil (4a) am Aussendurchmesser des Anschlußstutzengewindes angepasste Befestigungsmittel (11) aufweist, deren Innendurchmesser kleiner ist als der Aussendurchmesser des Klemmschuhs (1), dass der zweite Teil (4b) in angezogenem Zustand in Überwurfstellung am äusseren Schenkel (1c) des Klemmschuhs angreift, und dass Dichtungsstellen (9, 5; 9a, 12) vorgesehen sind, jeweils zwischen dem Klemmschuh und dem Anschlußstutzten, bzw. dem Rohr, die je aus zwei Dichtungsanordnungen (9, 5; 9a, 12) bestehen.

2. Vorrichtung nach Patentanspruch 1, dadurch gekennzeichnet, dass der Aussendurchmesser des Rohres (2) grösser wählbar ist als der Rechtsgewinde-Innendurchmesser (11) des ersten Teiles (4a) der zweiteiligen Mutter (4).

3. Vorrichtung nach den Patentansprüchen 1 und 2, dadurch gekennzeichnet, dass der zweite Teil (4b) der zweiteiligen Mutter (4) ein mit einem Linksaussengewinde versehenes Einsatzstück ist, in welches Linksaussengewinde ein Linksinnengewinde des ersten Teiles (4a) eingreift.

4. Vorrichtung nach den Patentansprüchen 1 bis 3, dadurch gekennzeichnet, dass die zwischen dem inneren Schenkel (1b) des Klemmschuhes (1) und dem Rohrende (2a) abzudichtende Stelle bei der angezogenen Überwurfmutter (4) einmal durch die O-Ringe (9) und andertmal durch die verklemmte Zahnung (5) und die zwischen dem Auslaufteil (1a) des Klemmschuhes (1) und der Innenwand (7a) des Gewindeanschlußstutzens (7) abzudichtende Stelle bei der angezogenen Überwurfmutter (4) einmal durch den O-Ring (9a) und andertmal durch die an einer Schrägfläche (12) des Auslaufteiles (1a) anliegende Innenwand (7a) des Gewindeanschlußstutzens (7) abgedichtet ist.

## Claims

1. Device for connecting a duct with a threaded pipe connection piece, with a screwed cap (4) slipped over the duct (2) or the duct end (2a) and a clamp plate (1) placed on the duct end (2a) which clamp plate has, in longitudinal section, to a considerable extent, the shape of a "U" which has an end section (1a), the sides of the "U" being placed astride the duct end (2a) and on their surfaces facing the duct each are provided with toothing (5, 6) where on the facing surfaces in the threaded pipe connection piece (7) of its end section (1a), as well as in the duct end (2a) on the facing surfaces of the inner shank (1b) of the clamp plate (1), notches (8, 8a) with fitted O-rings (9, 9a) are provided and the screwed cap (4) when tightened clamps the clamp plate (1) onto the duct end (2), characterised in that the screwed cap (4) is a nut with a first (4a) and a second (4b) section, which is meshed into the first part (4a), so that the first part (4a) on the outside diameter of the connection piece thread has adapted fixing media (11) whose inner diameter is smaller than the outside diameter of the clamp plate (1) so that the second part (4b) engages in its tightened state, in capped position on the external shank (1c) of the clamp plate, and that sealing points (9, 5; 9a, 12) are provided each between the clamp plate and the connection pieces or the duct, which each are composed of two sealing arrangements (9, 5, 9a, 12).

2. Device according to claim 1, characterised in that the outside diameter of the duct (2) can be selected greater than the right-handed thread inside diameter (11) of the first part (4a) of the two-piece nut (4).

3. Device according to claims 1 and 2 characterised in that the second part (4b) of the two-piece nut (4) is an insertion equipped with a left-handed, external thread, into which left-handed, external thread a left-handed, internal thread of the first part (4a) engages.

4. Device according to claims 1 to 3, characterised in that the spot to be stopped up between the inner side (1b) of the clamp plate (1) and the duct end (2a) is stopped up at the tightened screw cap (4), once through the O-rings (9) and one and a half times through the locked toothing (5), and the spot to be stopped up at the tightened screw cap (4), between the end section (1a) of the clamp plate (1) and the inside wall (7a) of the threaded pipe connection piece (7), is stopped up once through the O-ring (9a), and one and a half times through the adjoining inside wall (7a) of the threaded pipe connection piece (7) on a slanted surface (12) of the end section (7).

## Revendications

1. Dispositif pour le raccordement d'un tuyau avec un élément de raccord fileté, avec un écrou-chapeau (4) placé par-dessus le tuyau (2) respectivement l'extrémité du tuyau (2a) et un élément de serrage (1) enfiché sur l'extrémité du tuyau (2a), lequel élément de serrage a, en coupe longitudinale, la forme approximative d'un U présentant une partie terminale (1a), dont les ailes (1b, 1c) sont enfichées à califourchon sur l'extrémité du tuyau (2a) et pourvues chacune, sur la face tournée en regard du tuyau (2), d'une denture (5, 6), des rainures (8, 8a) dans lesquelles sont disposés des joints toriques (9, 9a) étant prévus dans la face de sa partie terminale (1a) placée en regard de l'élément de raccord fileté (7) ainsi que dans la face de l'aile inférieure (1b) de l'élément de serrage (1) placée en regard de la face intérieure de l'extrémité du tuyau (2a), et l'écrou-chapeau (4) pinçant l'extrémité du tuyau (2) lors du serrage de l'élément de serrage (1), caractérisé en ce que l'écrou-chapeau (4) est constitué d'une première (4a) et d'une deuxième pièce (4b), cette dernière etant en prise avec la première pièce (4a), en ce que la première pièce (4a) présente des moyens de fixation (11) sur le diamètre extérieur du filetage de l'élément de raccord, le diamètre intérieur desdits moyens étant inférieurs au diamètre extérieur de l'élément de serrage (1), en ce que la deuxième pièce (4b) est en prise avec l'aile extérieure (1c) de l'élément de serrage en débordant ladite aile, lorsque ladite deuxième pièce est serrée, et en ce que des endroits d'étanchéité (9, 5; 9a, 12), constitués chacun de deux agencements d'étanchéité (9, 5; 9a, 12) sont prévus chaque fois entre l'élément de serrage et l'élément de raccord, respectivement le tuyau.

2. Dispositif selon la revendication 1, caractérisé en ce que le diamètre extérieur du tuyau (2) peut être choisi plus grand que le diamètre intérieur du filetage à droite (11) de la première pièce (4a) de l'écrou (4) en deux pièces.

3. Dispositif selon les revendications 1 et 2, caractérisé en ce que la deuxième pièce (4b) de l'écrou (4) en deux pièces est une pièce intercalaire pourvue d'un filetage extérieur à gauche, lequel filetage extérieur à gauche est en prise avec un filetage intérieur à gauche de la première pièce (4a).

4. Dispositif selon les revendications 1 à 3, caractérisé en ce que l'étanchéité entre l'aile intérieure (1b) de l'élément de serrage (1) et l'extrémité du tuyau (2a) en position de serrage de l'écrou-chapeau (4) est obtenue, d'une part au moyen des joints toriques (9) et, d'autre part, au moyen de la denture serrée (5), et l'étanchéité entre la partie terminale (1a) de l'élément de serrage (1) et la paroi intérieure (7a) de l'élément de raccord fileté (7), en position de serrage de l'écrou-chapeau (4), est obtenue, d'une part, au moyen du joint torique (9a) et, d'autre part, au moyen de la paroi intérieure (7a) de l'élément de raccord fileté (7) venant contre une surface oblique (12) de la partie terminale (1a).

0 152 723